# EUROPEAN PATENT APPLICATION

(11) **EP 4 492 650 A1**
(43) Date of publication of application: **15.01.2025**
(21) Application number: 23766348.9
(22) Date of filing: 25.01.2023
(51) Int. Cl.: H02K 9/26, H02K 5/10, H02K 5/20

(54) **APPARATUS FOR REMOVING MAGNETIC FOREIGN MATTER, BRUSHLESS MOTOR, AND PROPELLER**

(30) Priority: 11.03.2022 JP 2022038638
(71) Applicant: DENSO CORPORATION, Kariya-city, Aichi 448-8661 (JP)
(72) Inventor: INOUE, Yoshiyasu, Kariya-city, Aichi 448-8661 (JP); KONNO, Yohei, Kariya-city, Aichi 448-8661 (JP)
(74) Representative: Kuhnen & Wacker Patent- und Rechtsanwaltsbüro PartG mbB
(86) International application number: PCT/JP2023/002327
(87) International publication number: WO 2023/171168

(57) **Abstract**

An apparatus for removing magnetic foreign matter includes a magnetic force generator and a magnetic material. The magnetic material is configured to be magnetized by the magnetic force generator and be brought into contact with fluid in a flow path that allows the fluid to flow therethrough.

## Description

### TECHNICAL FIELD

The present disclosure relates to an apparatus for removing magnetic foreign matter, a brushless motor, and a propulsion machine.

### BACKGROUND ART

In recent years, electrically powered aircrafts (hereinafter referred to as "flight hardware"), such as notably small aircrafts (small mobility intended for a few people), unmanned aerial vehicles (UAV), drones, flying robots and the like have been anticipated to be used in a wide variety of applications, such as checking, survey, agriculture, transportation, disaster prevention, passenger use and the like.

Many of flight hardware motors used in such electrically powered aircrafts are of a type of being driven with mainly limited battery power. In order to reinforce the value of flight hardware such as long-duration flight, increased payload, improved maneuverability (control stability during strong wind events), for the flight hardware motors, great emphasis is placed on higher cooling performance achieved by lightweight, high output, high efficiency and self wind pressure. Therefore, many of the flight hardware motors are currently dominated by an air-cooled open type, outer rotor brushless motor, and many of the products are given no consideration for dustproof ability.

Because the air-cooled open type brushless motor is structured to take outside air into the interior of the motor in an active manner, there is a challenge of the entry of dust and/or the like into the interior of the motor during driving. In some cases, dusts may include magnetic material such as iron sand and the like. It may be considered that the adhesion of the magnetic material to a magnetic force generator within the motor causes a decrease in motor functionality.

Technology relating to the outer rotor type electric motors is disclosed in, for example, Japanese Patent No. 6856446, Japanese laid-open patent publication No. 2020-145766, WO2018/216599, Japanese Patent No. 6692870, Japanese laid-open patent publication No. 2020-048292, WO2020/059654, Japanese laid-open patent publication No. 2019-033560, and WO2019/026900. In the above technologies, a cooling-air introduction hole is formed in a cover constituting an outer shell, and cooling air is introduced into the interior of the electric motor through the cooling-air introduction hole. In the technologies, however, the cooling air is simply introduced into the interior of the electric motor, but there is included no function of removing dust from the air which is a fluid flowing into the interior of the electric motor.

Not in the technologies as described above, but in prime motors using working fluid and/or the like, iron powder and/or the like can be preferably removed from the working fluid which is a fluid flowing through piping connected to the prime motor.

In light of the above, in a flow path in which the fluid flows, it is desirable to capture foreign matters exhibiting magnetic properties and moving together with the fluid.

### Summary of Invention

### Technical Problem

The present disclosure is provided in view of the above circumstances, and it is an object thereof to provide an apparatus for removing magnetic foreign matter capable of capturing, e.g., in a fluid flow path, foreign matters exhibiting magnetic properties and moving together with the fluid, as well as to provide a brushless motor and a propulsion machine.

### Solution to Problem

A first aspect according to the present disclosure provides an apparatus for removing magnetic foreign matter, comprising:
a magnetic force generator; and
a magnetic material configured to
   be magnetized by the magnetic force generator and be brought into contact with fluid in a flow path that allows the fluid to flow therethrough.

With the apparatus for removing magnetic foreign matter, the magnetic material magnetized by a magnetic force generator comes into contact with a fluid flowing in the flow path. Foreign matters with magnetic properties move together with the fluid and are attracted by the magnetic material. Because of this, in the flow path in which the fluid flows, it is possible to capture the foreign matters exhibiting magnetic properties and moving together with the fluid.

In the apparatus for removing magnetic foreign matter according to the first aspect, a second aspect according to the present disclosure provides the apparatus for removing magnetic foreign matter, wherein
the magnetic material includes a first magnetic material and a second magnetic material,
the first magnetic material is configured to
   be magnetized by a N pole of a magnet, which is the magnetic force generator and
   allow the fluid to pass therethrough,
the second magnetic material is configured to
   be magnetized by an S pole of a magnet and
   allow the fluid to pass therethrough, and
the first magnetic material and the second magnetic material are arranged face to face and spaced from each other in a flow direction in which the fluid is to flow.

With the apparatus for removing magnetic foreign matter, the first magnetic material is magnetized to the N pole of the magnet, and the second magnetic material is magnetized to the S pole of the magnet. Further, the first magnetic material and the second magnetic material are arranged face to face and spaced from each other in the flow direction of the fluid flowing. Therefore, a magnetic field is produced between the first magnetic material and the second magnetic material.

Then, the fluid passes through the first magnetic material and the second magnetic material, so that the foreign matters exhibiting magnetic properties and moving together with fluid are captured by at least one of the first magnetic material or the second magnetic material.

In the apparatus for removing magnetic foreign matter according to the second aspect, a third aspect according to the present disclosure provides the apparatus for removing magnetic foreign matter, wherein
the first magnetic material has a first mesh structure that includes a plurality of first metallic fibers and a plurality of second metallic fibers,
the first metallic fibers extend in a first direction and are arranged at intervals in a direction orthogonal to the first direction,
the second metallic fibers extend in a second direction, which intersects the first direction, and are arranged at intervals in a direction orthogonal to the second direction,
the second magnetic material has a second mesh structure that includes a plurality of third metallic fibers and a plurality of fourth metallic fibers,
the third metallic fibers extend in a third direction, which intersects the first direction and the second direction, and are arranged at intervals in a direction orthogonal to the third direction, and
the fourth metallic fibers extend in a fourth direction, which intersects the third direction, and are arranged at intervals in a direction orthogonal to the fourth direction.

With the apparatus for removing magnetic foreign matter, the first magnetic material is configured as the first mesh structure including a plurality of first metallic fibers and a plurality of second metallic fibers. The first metallic fibers extend in a first direction and are arranged at intervals in a direction orthogonal to the first direction. The second metallic fibers extend in a second direction intersecting the first direction. The second metallic fibers are arranged at intervals in a direction orthogonal to the second direction.

On the other hand, the second magnetic material is configured as the second mesh structure including a plurality of third metallic fibers and a plurality of fourth metallic fibers. The third metallic fibers extend in a third direction intersecting the first direction and the second direction. The third metallic fibers are arranged at intervals in a direction orthogonal to the third direction. The fourth metallic fibers extend in a fourth direction intersecting the third direction. The fourth metallic fibers are arranged at intervals in a direction orthogonal to the fourth direction.

Therefore, the first mesh structure and the second mesh structure are inhibited from overlapping each other when viewed in the flow direction of the fluid flowing, thereby increasing the probability that the foreign matters exhibiting magnetic properties can be captured by the first and second mesh structures.

In the apparatus for removing magnetic foreign matter according to the third aspect, a fourth aspect according to the present disclosure provides the apparatus for removing magnetic foreign matter, wherein
the first mesh structure partially includes a first frame shaped portion that includes a pair of the first metallic fibers and a pair of the second metallic fibers,
the second mesh structure partially includes a second frame shaped portion that includes a pair of the third metallic fibers and a pair of the fourth metallic fibers, and
the first frame shaped portion and the second frame shaped portion intersect each other as viewed in the flow direction.

With the apparatus for removing magnetic foreign matter, the first mesh structure partially includes the first frame shaped portion. The first frame shaped portion is formed into a rectangular frame shape by a pair of the first metallic fibers and a pair of the second metallic fibers. Likewise, the second mesh structure partially includes the second frame shaped portion. The second frame shaped portion is formed into a rectangular frame shape by a pair of the third metallic fibers and a pair of the fourth metallic fibers. The first frame shaped portion and the second frame shaped portion intersect each other as viewed in the flow direction of the fluid flowing.

Therefore, even if at least one of spaces, i.e., the space between adjacent first metallic fibers, the space between adjacent second metallic fibers, the space between adjacent third metallic fibers or the space between adjacent fourth metallic fibers, is increased, when one of the first frame shaped portion and the second frame shaped portion is viewed in the flow direction of the fluid flowing, a part of one of the frame shaped portions is located within the other. Thus, the first mesh structure and the second mesh structure are inhibited from serving as resistance to the fluid, while it is possible to increase the probability that the foreign matters exhibiting magnetic properties can be captured by the first and second mesh structures.

In the apparatus for removing magnetic foreign matter according to any one of the second aspect to the fourth aspect, a fifth aspect according to the present disclosure provides the apparatus for removing magnetic foreign matter, wherein
the magnet is held by a spacer, and
the spacer is made of a non-magnetic material and interposed between the first magnetic material and the second magnetic material.

With the apparatus for removing magnetic foreign matter, the non-magnetic material made spacer is interposed between the first magnetic material and the second magnetic material. The magnet is held by the spacer. Thus, the spacer inhibits the magnetization of the first magnetic material and the second magnetic material by the magnet from being obstructed, while the spacer is used to support the first magnetic material, the second magnetic material and the magnet.

A sixth aspect according to the present disclosure provides a brushless motor comprising:
a base member supporting a stator;
a shaft supported by the base member;
a rotor supported by the shaft and including a rotor housing covering the stator; and
the apparatus for removing magnetic foreign matter according to any one of the second aspect to the fifth aspect, wherein
the apparatus for removing magnetic foreign matter is arranged on an air flow path including a first ventilation hole in the rotor housing and a second ventilation hole in the base member.

With the brushless motor, the stator is supported by the base member, and the shaft is supported in the base member. The rotor including the rotor housing is supported on the shaft. The stator is covered with the rotor housing.

The first ventilation hole is installed in the rotor housing, and also the second ventilation hole is installed in the base member. The apparatus for removing magnetic foreign matter according to any one of the second to fifth aspects is placed on an air flow path including the first ventilation hole and the second ventilation hole.

Thus, during driving of the brushless motor, the first magnetic material and the second magnetic material are arranged face to face and spaced from each other in the flow direction of air flowing, and at least one of the first and second magnetic materials captures foreign matters exhibiting magnetic properties or moving together with the air.

In the brushless motor according to the sixth aspect, a seventh aspect according to the present disclosure provides the brushless motor, wherein
the rotor housing includes a circular plate portion with a plate thickness direction along an extending direction of the shaft,
the first ventilation hole is formed in the circular plate portion, and
the apparatus for removing magnetic foreign matter covers the first ventilation hole along the circular plate portion.

With the brushless motor, the rotor housing is configured to include a circular plate portion with a plate thickness direction along an extending direction of the shaft. The first ventilation hole is formed in the circular plate portion. The apparatus for removing magnetic foreign matter is placed to cover the first ventilation hole along the circular plate portion of the rotor housing. Thus, during driving of the brushless motor, the foreign matters exhibiting magnetic properties are inhibited from entering the interior of the brushless motor through the first ventilation hole.

In the brushless motor according to the seventh aspect, an eighth aspect according to the present disclosure provides the brushless motor, wherein
the first ventilation hole includes a plurality of first ventilation holes formed in a circumferential direction of the circular plate portion,
the magnet includes a plurality of magnets arranged in the circumferential direction of the circular plate portion, and
the plurality of magnets are arranged, such that each of the magnets overlaps a part of the circular plate portion between the first ventilation holes, which are adjacent to each other, as viewed in the extending direction.

With the brushless motor, a plurality of first ventilation holes is formed in a circumferential direction of the circular plate portion. Further, a plurality of magnets is arranged in the circumferential direction of the circular plate portion. Also, each magnet is placed to overlap a portion of the circular plate portion between adjacent first ventilation holes as viewed in the extending direction of the shaft. Thus, it is possible to inhibit the magnets from impairing an inflow of air toward the brushless motor through the first ventilation holes and an outflow of air from the brushless motor.

In the brushless motor according to any one of the sixth aspect to the eighth aspect, a ninth aspect according to the present disclosure provides the brushless motor, wherein
the base member includes, as an outer peripheral portion, an outer peripheral wall portion,
the second ventilation hole is formed in the outer peripheral wall portion, and
the apparatus for removing magnetic foreign matter covers the second ventilation hole along the outer peripheral wall portion.

With the brushless motor, the base member is configured to include an outer peripheral wall portion forming an outer peripheral portion of the base member. The second ventilation hole is formed in the outer peripheral wall portion. Then the apparatus for removing magnetic foreign matter is arranged to cover the second ventilation hole along the outer peripheral wall portion of the base member. Thus, during driving of the brushless motor, the foreign matters exhibiting magnetic properties are inhibited from entering the interior of the brushless motor through the second ventilation hole.

In the brushless motor according to the ninth aspect, a tenth aspect according to the present disclosure provides the brushless motor, wherein
the second ventilation hole includes a plurality of second ventilation holes formed in a circumferential direction of the outer peripheral wall portion,
the magnet includes a plurality of magnets arranged in the circumferential direction of the outer peripheral wall portion, and
the magnets are arranged, such that each of the plurality of magnets overlaps a portion of the outer peripheral wall portion between the second ventilation holes, which are adjacent to each other, as viewed in a thickness direction of the outer peripheral wall portion.

With the brushless motor, a plurality of second ventilation holes is formed in a circumferential direction of the outer peripheral wall portion. Further, a plurality of magnets is arranged in the circumferential direction of the outer peripheral wall portion. Each magnet is placed to overlap a portion of the outer peripheral wall portion between adjacent second ventilation holes as viewed in a thickness direction of the outer peripheral wall portion. Thus, it is possible to inhibit the magnets from impairing an inflow of air toward the brushless motor through the second ventilation holes and an outflow of air from the brushless motor.

An eleventh aspect according to the present disclosure provides a propulsion machine comprising:
a brushless motor including a base member supporting a stator, a shaft supported by the base member, and a rotor supported by the shaft and including a rotor housing covering the stator;
a propeller supported by the shaft;
a nacelle accommodating the brushless motor; and
the apparatus for removing magnetic foreign matter according to any one of the second aspect to the fifth aspect, wherein
the apparatus for removing magnetic foreign matter covers a ventilation hole in the nacelle.

With the propulsion machine, the brushless motor is included. The brushless motor is configured to include the base member, the shaft and the rotor. The base member supports a stator and also supports the shaft. Also, the rotor including the rotor housing is supported on the shaft. The rotor housing covers the stator.

Upon driving of the brushless motor, the propeller supported on the shaft rotates. The rotation of the propeller produces the thrust force.

The brushless motor is covered with the nacelle. The ventilation hole is installed in the nacelle. Then, upon driving of the brushless motor, the inflow of air occurs toward the brushless motor from the outside of the nacelle through the ventilation hole.

Here, the apparatus for removing magnetic foreign matter according to any one of the second aspect to the fifth aspect is arranged in the ventilation hole of the nacelle to cover the ventilation hole. Thus, during driving of the brushless motor, the first magnetic material and the second magnetic material are arranged face to face and spaced from each other in the flow direction of air flowing, and at least one of the first and second magnetic materials captures foreign matters exhibiting magnetic properties or moving together with the air.

### BRIEF DESCRIPTION OF THE DRAWINGS

FIG. 1 is a perspective view of flight hardware according to a first embodiment of the present disclosure.
FIG. 2 is a plan view of a brushless motor according to the first embodiment of the present disclosure.
FIG. 3 is a side view of a brushless motor according to the first embodiment of the present disclosure.
FIG. 4 is an exploded perspective view of a brushless motor according to the first embodiment of the present disclosure.
FIG. 5 is a plan view illustrating the configuration of a first apparatus for removing magnetic foreign matter according to the first embodiment of the present disclosure.
FIG. 6 is a sectional view illustrating the configuration of the first apparatus for removing magnetic foreign matter according to the first embodiment of the present disclosure.
FIG. 7 is an exploded perspective view illustrating the configuration of the first apparatus for removing magnetic foreign matter according to the first embodiment of the present disclosure.
FIG. 8 is an enlarged view illustrating a principal portion of the configuration of the first apparatus for removing magnetic foreign matter according to the first embodiment of the present disclosure.
FIG. 9 is a plan view illustrating the configuration of a second apparatus for removing magnetic foreign matter according to the first embodiment of the present disclosure.
FIG. 10 is a sectional view illustrating the configuration of the second apparatus for removing magnetic foreign matter according to the first embodiment of the present disclosure.
FIG. 11 is an exploded perspective view illustrating the configuration of the second apparatus for removing magnetic foreign matter according to the first embodiment of the present disclosure.
FIG. 12 is a plan view illustrating the configuration of a first apparatus for removing magnetic foreign matter according to a first modification of the first embodiment of the present disclosure.
FIG. 13 is a sectional view illustrating the configuration of a second apparatus for removing magnetic foreign matter according to a first modification of the first embodiment of the present disclosure.
FIG. 14 is a sectional view illustrating the configuration of a propulsion machine according to a second modification of the first embodiment of the present disclosure.
FIG. 15 is a sectional view illustrating the configuration of an apparatus for removing magnetic foreign matter according to a second embodiment of the present disclosure.

### DESCRIPTION OF EMBODIMENTS

### First Embodiment

Initially, a first embodiment of the present disclosure will be described.

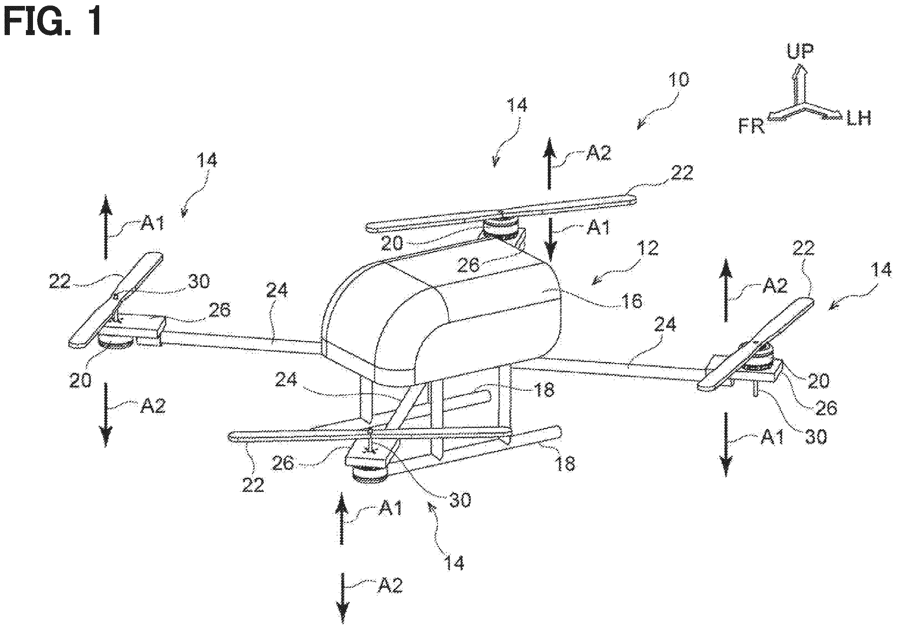

Flight hardware 10 (electrically powered multi-copter) according to the embodiment illustrated in FIG. 1 is enabled to fly by remote control or automatic control. The flight hardware 10 includes a main body 12 and a plurality of propulsion machines 14. Arrow FR points forward in the front-back direction of the flight hardware 10. Arrow LH points leftward in the left-right direction of the flight hardware 10. Arrow UP points upward in the vertical direction of the flight hardware 10.

The main body 12 has a cabin 16 and a pair of leg portions 18. The cabin 16 is formed into a box shape. The cabin 16 is equipped with various control devices and various sensors. The pair of leg portions 18 is installed on the underside of the cabin 16.

The number of propulsion machines 14 is four, by way example. The plurality of propulsion machines 14 is symmetrically arranged on the front, back, left and right sides of the main body 12. Specifically, a first propulsion machine 14 is arranged on the front left side of the main body 12. A second propulsion machine 14 is arranged on the front right side of the main body 12. A third propulsion machine 14 is arranged on the back left side of the main body 12. A fourth propulsion machine 14 is arranged on the back right side of the main body 12.

Each of the propulsion machines 14 has a motor 20 and a propeller 22. The propulsion machine 14 is secured to the main body 12 through a rod 24 and a support member 26. The rod 24 extends from the main body 12 and the support member 26 is mounted on a leading end of the rod 24.

The motor 20 of each propulsion machine 14 is supported by the support member 26 with an axial direction along the vertical direction of the main body 12. As detailed later, the motor 20 has a motor body 28 and a shaft 30. The motor body 28 has a stator 32 and a rotor 34, and the shaft 30 rotates integrally with the rotor 34. A plurality of motors 20 is identical in configuration. Each motor 20 is one example of the "brushless motor".

The motor bodies 28 of the front left motor 20 and the front right motor 20 are respectively placed on the undersides of the support members 26, and each of the motor bodies 28 is secured to the corresponding support member 26 with one side (the arrow A1 side) of the axial direction pointed up. On the other hand, the motor bodies 28 of the back left motor 20 and the back right motor 20 are respectively placed on the upper sides of the support members 26, and each of the motor bodies 28 is secured to the corresponding support member 26 with the other side (the arrow A2 side) of the axial direction pointed up. In each of the motors 20, the shaft 30 extends upward from the motor body 28, and the propeller 22 is secured to the upper end portion of the shaft 30.

Subsequently, a specific configuration of the motor 20 is described.

The motor 20 described here as an example is placed with the other side (the arrow A2 side) of the axial directions pointed up, such as the above-described back left motor 20 and back right motor 20.

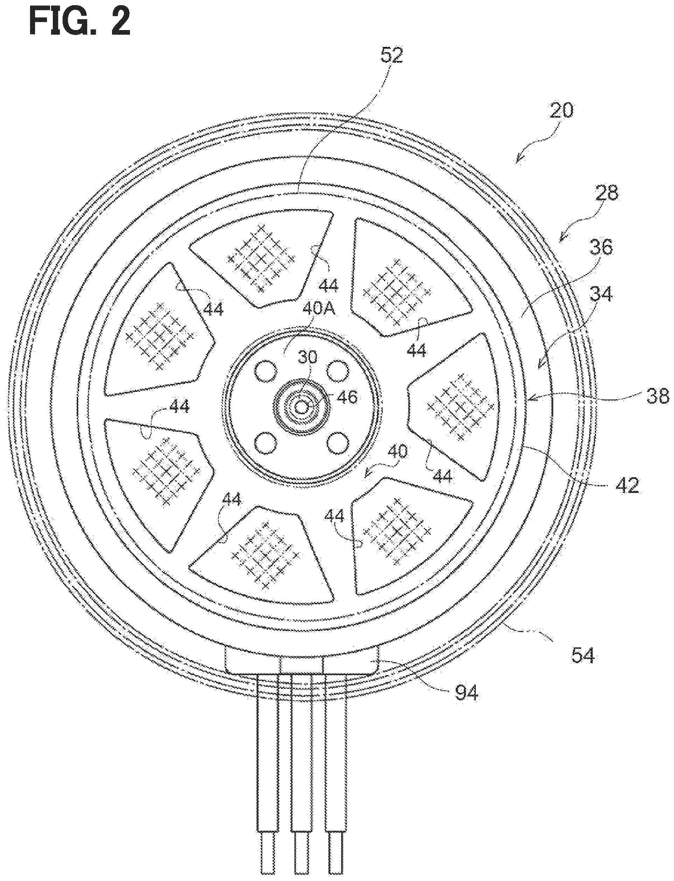

As illustrated in FIG. 2 to FIG. 4, the motor 20 is an outer rotor type brushless motor, and includes the shaft 30, the stator 32, the rotor 34 and a base member 36 (centerpiece). The arrow A1 side indicates one side of the axial direction of the motor 20, whereas the arrow A2 side indicates the other side of the axial direction of the motor 20. The axial direction of the motor 20 corresponds to the vertical direction of the above-described flight hardware 10 (see FIG. 1).

The stator 32, the rotor 34 and the base member 36 partially form the motor body 28. The stator 32 has a stator core 32A and a plurality of wound coil portions 32B wound around the stator core 32A.

The rotor 34 has a rotor housing 38 and a plurality of magnets which are not shown. The rotor housing 38 includes an approximately disc shaped circular plate portion 40 and a back yoke 42 and is formed into a capped cylindrical shape. The circular plate portion 40 has a plate thickness direction along the axial direction of the motor 20, i.e., the extending direction of the shaft 30. The back yoke 42 is placed along an outer edge portion of the circular plate portion 40. In areas of the circular plate portion 40 facing the wound coil portion 32B, a plurality of cooling holes 44 is formed to penetrate in the axial direction of the rotor housing 38. The plurality of cooling holes 44 is formed side by side in a circumferential direction of the rotor housing 38. The cooling holes 44 are an example of "first ventilation holes".

A through hole 46 is formed in a central portion of the circular plate portion 40 to penetrate in the axial direction of the rotor housing 38. The shaft 30 is inserted through the through hole 46. In the central portion of the circular plate portion 40, a protrusion 40A is formed to protrude toward the arrow A2 side of the rotor housing 38. In the protrusion 40A, a plurality of screw holes 48 is formed to extend in a radial direction of the rotor housing 38.

The plurality of screw holes 48 is in communication with the through hole 46. Setscrews, not shown, are threaded into the plurality of screw holes 48, respectively. The leading ends of the respective setscrews are fitted respectively into a plurality of recesses which are formed in the shaft 30 but are not shown, so that the shaft 30 is secured to the rotor housing 38. A drain hole, not shown, is also formed around the protrusion 40A in the rotor housing 38 to penetrate in the axial direction of the rotor housing 38.

The back yoke 42 encircles the stator 32, and the rotor housing 38 covers the stator 32 from above in the vertical direction of the flight hardware 10.

On the other hand, a plurality of magnets is fastened onto the inner peripheral face of the back yoke 42. The magnets are arranged side by side in a circumferential direction of the back yoke 42, and clearance is ensured between the magnets and the stator 32.

The base member 36 is configured to include a disk portion 36A and an outer peripheral wall portion 36B which is mounted along the outer periphery of the disk portion 36A and forms an outer peripheral portion of the base member 36. The disk portion 36A is formed into a circular plate shape as viewed in the vertical direction of the flight hardware 10. The disk portion 36A is placed to face the stator 32 on the arrow A1 side of the stator 32 in order to support the stator 32. The shaft 30 is also supported in the base member 36 through a bearing which is not shown. A drain hole, not shown, is formed in the disk portion 36A to penetrate in the axial direction of the disk portion 36A.

On the other hand, a plurality of cooling holes 50 is formed in the outer peripheral wall portion 36B along the circumferential direction of the outer peripheral wall portion 36B to penetrate in the radial direction of the disk portion 36A. The cooling holes 50 are an example of "second ventilation holes".

In the motor 20 in the present embodiment, as described above, the cooling holes 44 are installed in the rotor 34, and the cooling holes 50 are installed in the base member 36. The cooling holes 44 and the cooling holes 50 are also in communicate with the clearance between the stator 32 and the magnets mounted on the back yoke 42.

Thus, air intake and air exhaustion are performed through the plurality of cooling holes 44 and the plurality of cooling holes 50, thereby producing a flow of cooling air within the motor 20. As a result, the interior of the motor 20 is cooled by the flow of cooling air. In this manner, the motor 20 in the embodiment is configured as air-cooled open type.

In the embodiment, the first apparatus for removing magnetic foreign matter 52 is arranged with respect to the cooling holes 44 installed in the rotor 34. A second apparatus for removing magnetic foreign matter 54 is installed with respect to the cooling holes 50 placed in the base member 36.

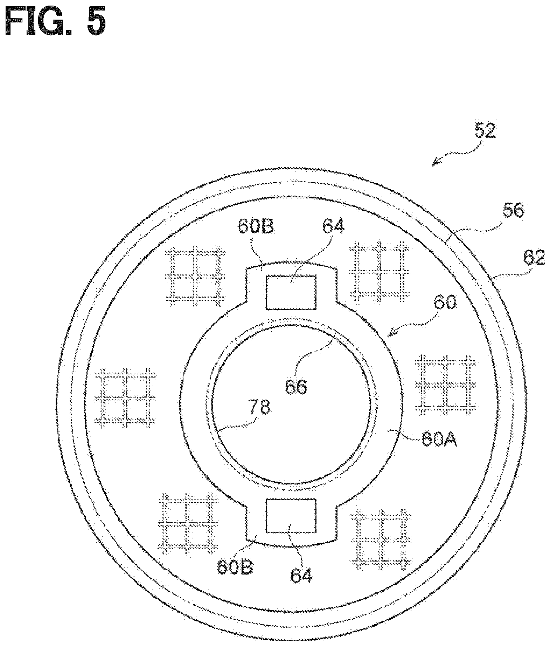

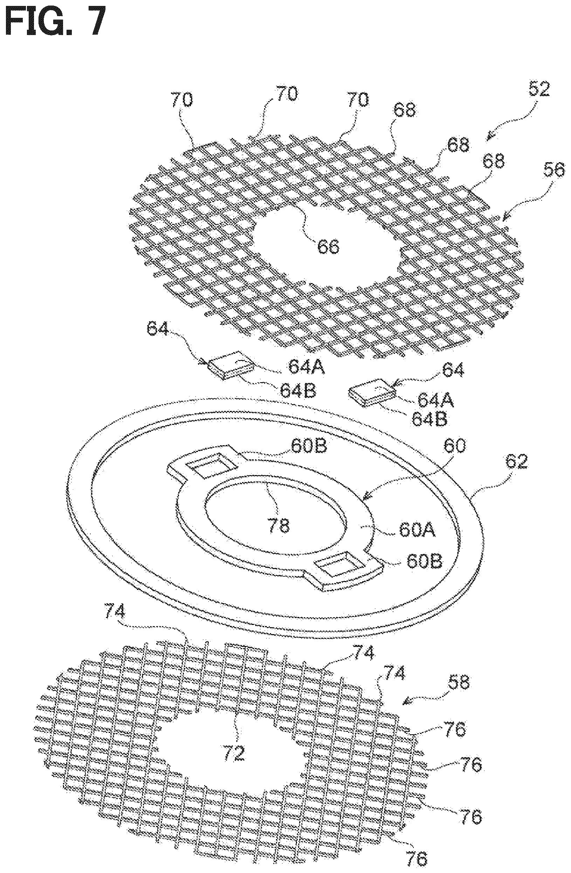

The first apparatus for removing magnetic foreign matter 52 is arranged on the upper side of the circular plate portion 40 of the rotor housing 38 in the vertical direction of the flight hardware 10. As illustrated in FIG. 5 to FIG. 7, the first apparatus for removing magnetic foreign matter 52 is formed into a circular plate shape having a thickness direction along the vertical direction of the flight hardware 10 as a whole.

The first apparatus for removing magnetic foreign matter 52 includes a metallic mesh 56, a metallic mesh 58, an inner spacer 60, an outer spacer 62 and a pair of magnets 64. The metallic mesh 56 is an example of a "first magnetic material" and a "first mesh structure". The metallic mesh 58 is an example of a "second magnetic material" and a "second mesh structure". The magnets 64 is an example of a "magnetic force generator".

By way example, metallic fibers made of a ferromagnet such as iron and the like are woven so that the metallic mesh 56 is formed into a circular plate shape with an approximately circular through hole 66 formed in a central portion as viewed in the vertical direction of the flight hardware 10.

More specifically, the metallic mesh 56 is configured to include a plurality of metallic fibers 68 and a plurality of metallic fibers 70. As viewed in the vertical direction of the flight hardware 10, the metallic fibers 68 extend in a first direction and are arranged at intervals in a direction orthogonal to the first direction, while the metallic fibers 70 extend in a second direction intersecting the first direction, and are arranged at intervals in a direction orthogonal to the second direction. The metallic fibers 68 are an example of "first metallic fibers, and the metallic fibers 70 are an example of "second metallic fibers".

The metallic mesh 58 is configured basically similarly to the metallic mesh 56, so that a through hole 72 is formed in a central portion thereof. The metallic mesh 58 is configured to include a plurality of metallic fibers 74 and a plurality of metallic fibers 76. As viewed in the vertical direction of the flight hardware 10, the metallic fibers 74 extend in a third direction intersecting the first direction and the second direction and also the metallic fibers 74 are arranged at intervals in a direction orthogonal to the third direction, while the metallic fibers 76 extend in a fourth direction intersecting the third direction, and the metallic fibers 76 are arranged at intervals in a direction orthogonal to the third direction. The metallic fibers 74 are an example of "third metallic fibers, and the metallic fibers 76 are an example of "fourth metallic fibers".

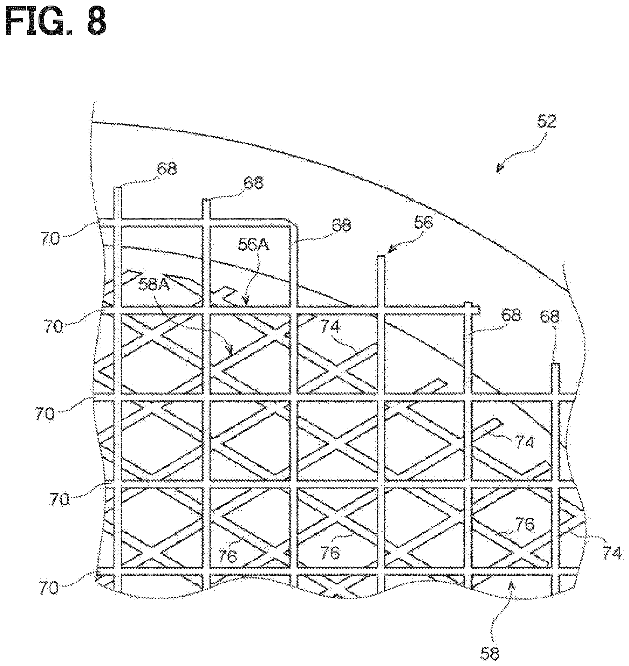

As illustrated in detail in FIG. 8, a frame shaped portion 56A includes part of the metallic mesh 56, and includes a pair of metallic fibers 68 and a pair of metallic fibers 70. A frame shaped portion 58A includes part of the metallic mesh 58 and includes a pair of metallic fibers 74 and a pair of metallic fibers 76. The frame shaped portion 56A and the frame shaped portion 58A intersect each other as viewed in the vertical direction of the flight hardware 10. In other words, as viewed from a flow direction of cooling air (air) flowing through the cooling holes 44, the frame shaped portion 56A and the frame shaped portion 58A intersects each other. The frame shaped portion 56A is an example of a "first frame shaped portion", and the frame shaped portion 58A is an example of a "second frame shaped portion".

The inner spacer 60 is formed of non-magnetic material such as resin, aluminum and the like. The inner spacer 60 includes a main body 60A and a pair of holding pieces 60B formed integrally with the main body 60A. The main body 60A is formed into a ring shape as viewed in the vertical direction of the flight hardware 10 and also into a plate shape having a plate thickness direction along the vertical direction of the flight hardware 10. On the other hand, the holding pieces 60B are placed, respectively, on one radial side and the other radial side of the main body 60A, and each holding piece 60B is formed into a rectangular plate shape as viewed in the vertical direction of the flight hardware 10. A through hole 78 is formed in a central portion of the main body 60A so that the protrusion 40A of the rotor housing 38 can be fitted into the through hole 78.

On the other hand, a through hole 80 is formed in each holding piece 60B and into a rectangularly shape as viewed in the vertical direction of the flight hardware 10. A locking portion, not shown, is formed in the inner spacer 60. The locking portion is engaged with a locked portion formed on the circular plate portion 40 of the rotor housing 38, so that the first apparatus for removing magnetic foreign matter 52 is detachably attached to the rotor housing 38.

The outer spacer 62 is formed of non-magnetic material such as resin, aluminum and the like. The outer spacer 62 is formed into an annular plate shape located on the side of the outer periphery of the inner spacer 60 as viewed in the vertical direction of the flight hardware 10. Then, joint portions, not shown, such as an adhesive agent and the like are used, respectively, to join the metallic mesh 56 onto the surface of the inner spacer 60 and the outer spacer 62 on the upper side in the vertical direction of the flight hardware 10, and to join the metallic mesh 58 onto the surface of the inner spacer 60 and the outer spacer 62 on the lower side in the vertical direction of the flight hardware 10.

In conditions where the first apparatus for removing magnetic foreign matter 52 is mounted to the rotor housing 38, the cooling holes 44 of the rotor housing 38 are located between the inner spacer 60 and the outer spacer 62 as viewed in the vertical direction of the flight hardware 10.

On the other hand, the magnet 64 is formed into a rectangular plate shape as viewed in the vertical direction of the flight hardware 10. The magnet 64 is fitted in each through hole 80 of the inner spacer 60 in order to be held by the inner spacer 60. The magnet 64 is arranged with an N pole 64A placed on the upper side in the vertical direction of the flight hardware 10 and an S pole 64B placed on the lower side in the vertical direction of the flight hardware 10. The metallic mesh 56 is magnetized to the N pole 64A, while the metallic mesh 58 is magnetized to the S pole 64B.

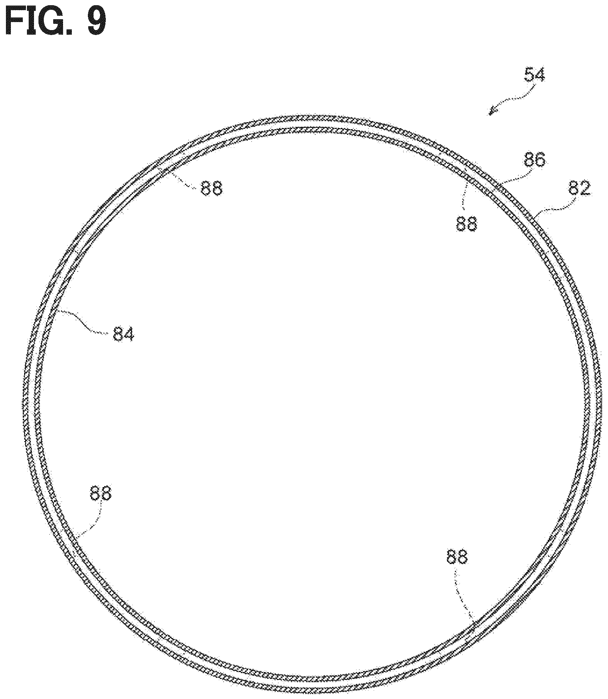

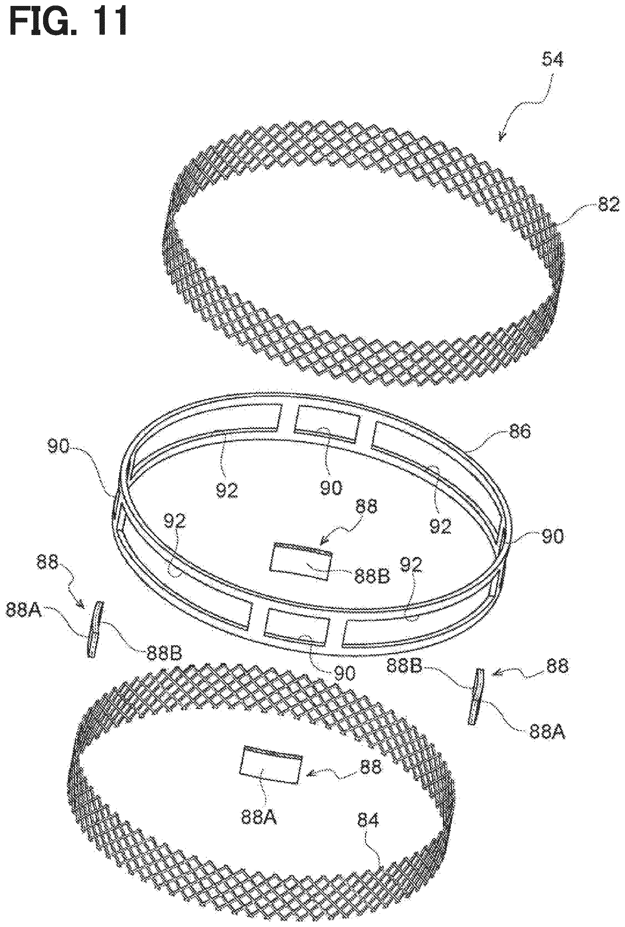

On the other hand, as illustrated in FIG. 9 to FIG. 11, the second apparatus for removing magnetic foreign matter 54 is arranged on the side of the outer periphery of the outer peripheral wall portion 36B of the base member 36. The second apparatus for removing magnetic foreign matter 54 is formed into a cylindrical shape surrounding the motor 20 as viewed in the vertical direction of the flight hardware 10.

The second apparatus for removing magnetic foreign matter 54 includes a metallic mesh 82, a metallic mesh 84, a spacer 86 and four magnets 88. The metallic mesh 82 is an example of a "first magnetic material" and a "first mesh structure". The metallic mesh 84 is an example of a "second magnetic material" and a "second mesh structure". The magnets 88 is an example of a "magnetic force generator".

The metallic mesh 82 forms the outer peripheral side of the second apparatus for removing magnetic foreign matter 54. By way of example, metallic fibers made of a ferromagnet such as iron and the like are woven so that the metallic mesh 82 is formed into a cylindrical shape which is a circle as viewed in the vertical direction of the flight hardware 10.

The metallic mesh 84 forms the inner peripheral side of the second apparatus for removing magnetic foreign matter 54. The metallic mesh 84 is configured basically similarly to the metallic mesh 82.

The spacer 86 is formed of non-magnetic material such as resin, aluminum and the like. The spacer 86 is formed into a cylindrical shape which is a circle as viewed in the vertical direction of the flight hardware 10. The spacer 86 has four through holes 90 formed therein to be spaced at 90-degree intervals from each other as viewed in the vertical direction of the flight hardware 10. A through hole 92 is formed between adjacent through holes 90. The through hole 92 is larger than the through hole 90 in the circumferential direction of the spacer 86.

Joint portions such as an adhesive agent and the like, not shown, are used, respectively, to join the metallic mesh 82 onto the surface on the outer peripheral side of the spacer 86, and to join the metallic mesh 84 onto the surface on the inner peripheral side of the spacer 86. A locking portion, not shown, is formed in the spacer 86. The locking portion is engaged with a connector connection portion 94 (see FIG. 2) mounted to the base member 36, so that the second apparatus for removing magnetic foreign matter 54 is detachably attached to the motor 20 while remaining spaced from the base member 36.

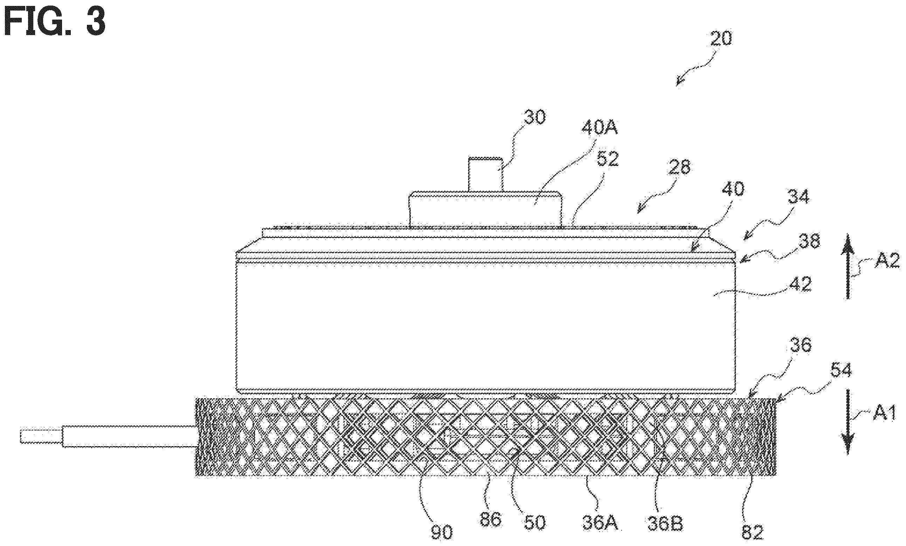

After the second apparatus for removing magnetic foreign matter 54 is attached to the motor 20, the cooling holes 50 of the base member 36 are located on the inner side of the through holes 92 as viewed in the radial direction of the spacer 86 (see FIG. 3).

On the other hand, the magnets 88 are each formed into a rectangular plate shape as viewed in the radial direction of the spacer 86. The magnets 88 are fitted into the through holes 90 of the spacer 86 to be held by the spacer 86. Each magnet 88 is arranged with an N pole 88A placed on the outer side in the radial direction of the spacer 86 and an S pole 88B placed on the inner side in the radial direction of the spacer 86. The metallic mesh 82 is magnetized to the N pole 88A, while the metallic mesh 84 is magnetized to the S pole 88B.

A gap filler member is arranged between the base member 36 and the peripheral edge portion of the second apparatus for removing magnetic foreign matter 54 on the upper side in the vertical direction of the flight hardware 10, while another gap filler member is arranged between the base member 36 and the peripheral edge portion of the second apparatus for removing magnetic foreign matter 54 on the lower side in the vertical direction of the flight hardware 10. The gap filler members are each formed of non-magnetic material with elasticity such as a sponge and the like.

Subsequently, operations and advantageous effects of the embodiment are described.

With the first apparatus for removing magnetic foreign matter 52 and the second apparatus for removing magnetic foreign matter 54 according to the embodiment as illustrated in FIG. 2, the metallic mesh 56 and the metallic mesh 58 which are magnetized by the magnets 64, as well as the metallic mesh 82 and the metallic mesh 84 which are magnetized by the magnets 88, come into contact with air flowing in the cooling air flow path, whereupon the metallic mesh 56, the metallic mesh 58, the metallic mesh 82 and the metallic mesh 84 attract the metallic foreign matters, such as iron and the like, moving together with the air. Therefore, the foreign matters exhibiting magnetic properties and moving together with air are able to be captured in the cooling air flow path in which air flows.

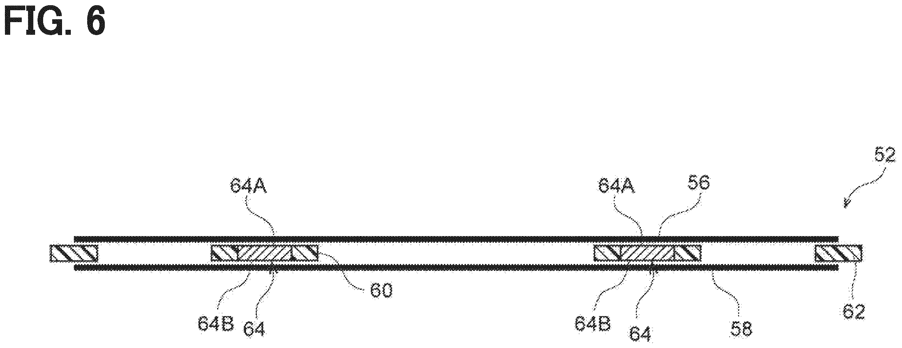

As illustrated in FIG. 6, in the first apparatus for removing magnetic foreign matter 52, the metallic mesh 56 is magnetized to the N pole 64A of the magnets 64 and the metallic mesh 58 is magnetized to the S pole 64B of the magnets 64. The metallic mesh 56 and the metallic mesh 58 are arranged face to face and spaced from each other in the flow direction of cooling air flowing. Therefore, a magnetic field is produced between the metallic mesh 56 and the metallic mesh 58.

By allowing air to pass through the metallic mesh 56 and the metallic mesh 58, the magnetic foreign matters moving together with the air are captured by at least one of the metallic mesh 56 or the metallic mesh 58.

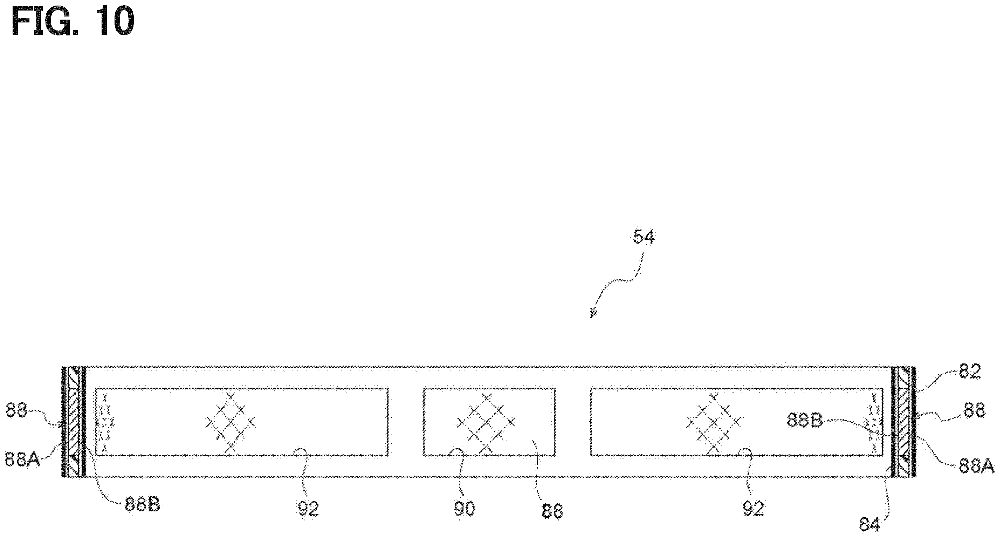

As illustrated in FIG. 10, in the second apparatus for removing magnetic foreign matter 54, the metallic mesh 82 is magnetized to the N pole 88A of the magnets 88 and the metallic mesh 84 is magnetized to the S pole 88B of the magnets 88. The metallic mesh 82 and the metallic mesh 84 are arranged face to face and spaced from each other in the flow direction of cooling air flowing. Therefore, a magnetic field is produced between the metallic mesh 82 and the metallic mesh 84.

By allowing air to pass through the metallic mesh 82 and the metallic mesh 84, the magnetic foreign matters moving together with the air are captured by at least one of the metallic mesh 82 or the metallic mesh 84.

As illustrated in FIG. 8, in the first apparatus for removing magnetic foreign matter 52, the metallic mesh 56 include a plurality of metallic fibers 68 and a plurality of metallic fibers 70. The metallic fibers 68 extend in a first direction and are arranged at intervals in a direction orthogonal to the first direction. The metallic fibers 70 extend in a second direction intersecting the first direction, and are arranged at intervals in a direction orthogonal to the second direction.

On the other hand, the metallic mesh 58 includes a plurality of metallic fibers 74 and a plurality of metallic fibers 76. The metallic fibers 74 extend in a third direction intersecting the first direction and the second direction, and the metallic fibers 74 are arranged at intervals in a direction orthogonal to the third direction. The metallic fibers 76 extend in a fourth direction intersecting the third direction, and are arranged at intervals in a direction orthogonal to the fourth direction.

Therefore, the metallic mesh 56 and the metallic mesh 58 are inhibited from overlapping each other when viewed in the flow direction of cooling air flowing, thereby increasing the probability that the foreign matters exhibiting magnetic properties can be captured by the metallic meshes 56, 58.

In the first apparatus for removing magnetic foreign matter 52, part of the metallic mesh 56 includes the frame shaped portion 56A. The frame shaped portion 56A is formed into a rectangular frame shape by a pair of metallic fibers 68 and a pair of metallic fibers 70. Likewise, part of the metallic mesh 58 includes the frame shaped portion 58A. The frame shaped portion 58A is formed into a rectangular frame shape by a pair of metallic fibers 74 and a pair of metallic fibers 76. Then, the frame shaped portion 56A and the frame shaped portion 58A intersect each other when viewed in the flow direction of cooling air flowing.

Therefore, even if at least one of spaces, i.e., the space between adjacent metallic fibers 68, the space between adjacent metallic fibers 70, the space between adjacent metallic fibers 74 or the space between adjacent metallic fibers 76, is increased, when one of the frame shaped portion 56A and the frame shaped portion 58A is viewed in the flow direction of cooling air flowing, a part of one of the frame shaped portions is located within the other. Thus, the metallic mesh 56 and the metallic mesh 58 are inhibited from serving as resistance to the cooling air, while it is possible to increase the probability that the foreign matters exhibiting magnetic properties can be captured by the metallic meshes 56, 58.

As illustrated in FIG. 6, in the first apparatus for removing magnetic foreign matter 52, the inner spacer 60 and the outer spacer 62, which are made of non-magnetic material, are interposed between the metallic mesh 56 and the metallic mesh 58, and the magnet 64 is held by the inner spacer 60. Because of this, the inner spacer 60 and the outer spacer 62 inhibit the magnetization of the metallic mesh 56 and the metallic mesh 58 by the magnet 64 from being obstructed, while the inner spacer 60 and the outer spacer 62 may be used to support the metallic mesh 56, the metallic mesh 58 and the magnet 64. Similar considerations apply to the second apparatus for removing magnetic foreign matter 54.

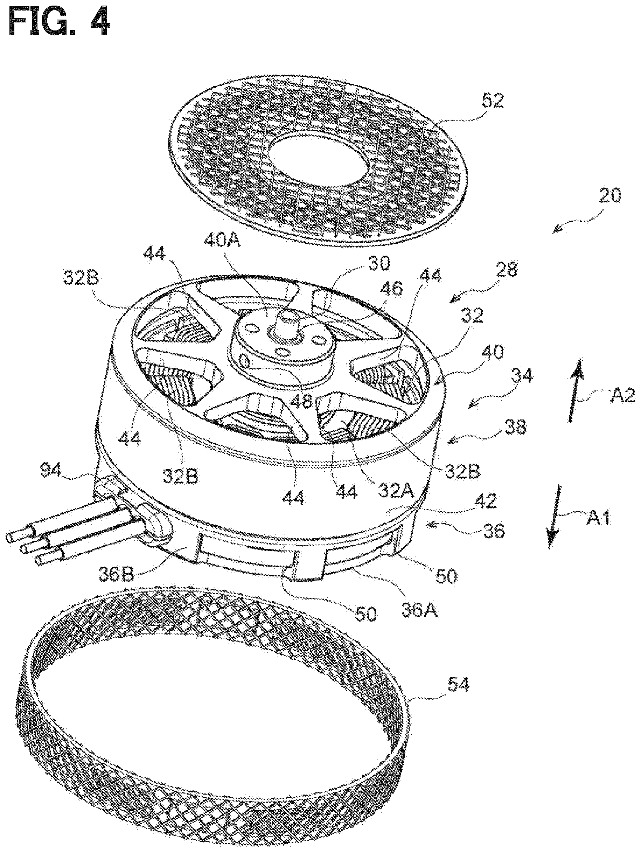

As illustrated in FIG. 4, in the motor 20, the stator 32 is supported by the base member 36, and the shaft 30 is supported via a bearing in the base member 36. The rotor 34 including the rotor housing 38 is supported on the shaft 30, and the stator 32 is covered with the rotor housing 38.

The cooling holes 44 are placed in the rotor housing 38 and the cooling holes 50 are placed in the base member 36. The first apparatus for removing magnetic foreign matter 52 and the second apparatus for removing magnetic foreign matter 54 are arranged on the cooling-air flow path including the cooling holes 44 and the cooling holes 50.

Therefore, during driving of the motor 20, in the first apparatus for removing magnetic foreign matter 52, the metallic mesh 56 and the metallic mesh 58 are arranged face to face and spaced from each other in the flow direction of cooling air flowing, and at least one of the metallic mesh 56 or the metallic mesh 58 captures magnetic foreign matters moving together with the air.

In the second apparatus for removing magnetic foreign matter 54, the metallic mesh 82 and the metallic mesh 84 are arranged face to face and spaced from each other in the flow direction of cooling air flowing, and at least one of the metallic meshes 82 or 84 captures magnetic foreign matters moving together with the air.

In the motor 20, the rotor housing 38 is configured to include the circular plate portion 40 having a plate thickness direction along the extending direction of the shaft 30. The cooling holes 44 are formed in the circular plate portion 40 as illustrated in FIG. 2. The first apparatus for removing magnetic foreign matter 52 is arranged to cover the cooling holes 44 along the circular plate portion 40. Therefore, during driving of the motor 20, the magnetic foreign matters may be inhibited from entering the interior of the motor 20 through the cooling holes 44.

As illustrated in FIG. 4 and FIG. 10, in the motor 20, the base member 36 is configured to include the outer peripheral wall portion 36B essentially forming the outer peripheral portion of the base member 36, and the cooling holes 50 are formed in the outer peripheral wall portion 36B. The second apparatus for removing magnetic foreign matter 54 is arranged to cover the cooling holes 50 along the outer peripheral wall portion 36B. Therefore, during driving of the motor 20, the magnetic foreign matters may be inhibited from entering the interior of the motor 20 through the cooling holes 50.

Next, the modification of the present embodiment will be described.

### First Modification

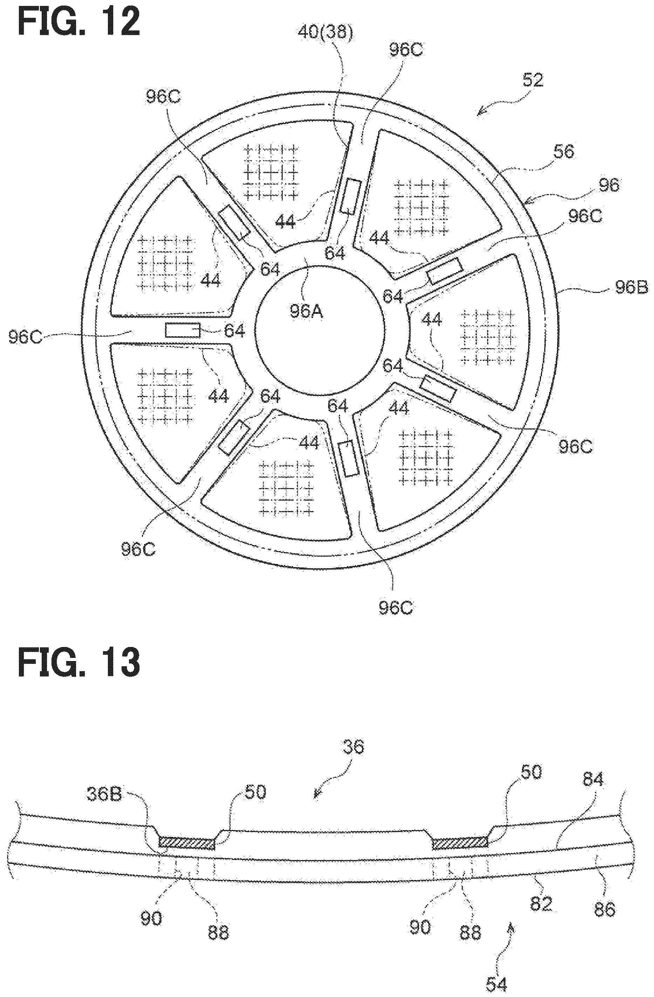

In a first modification illustrated in FIG. 12 and FIG. 13, the first apparatus for removing magnetic foreign matter 52 includes a spacer 96 instead of the inner spacer 60 and the outer spacer 62.

The spacer 96 is configured to include an inner peripheral portion 96A, an outer peripheral portion 96B and a plurality of connection portions 96C. The inner peripheral portion 96A forms the center side of the spacer 96 and is formed into a ring shape as viewed in the vertical direction of the flight hardware 10. The outer peripheral portion 96B forms the outer peripheral side of the spacer 96 and is formed into a ring shape as viewed in the vertical direction of the flight hardware 10. The connection portions 96C extend radially from the inner peripheral portion 96A and join the inner peripheral portion 96A and the outer peripheral portion 96B to each other.

In conditions where the first apparatus for removing magnetic foreign matter 52 is attached to the rotor housing 38, each of the connection portions 96C overlaps a portion of the circular plate portion 40 between adjacent cooling holes 44 when viewed in the extending direction of the shaft 30. Then, the magnets 64 are mounted respectively to the connection portions 96C as is the case with the inner spacer 60.

In the first modification, in the spacer 86 of the second apparatus for removing magnetic foreign matter 54, each magnet 88 is fitted in the through hole 90 and a portion of the spacer 86 corresponding to the through hole 90 overlaps a portion of the outer peripheral wall portion 36B between adjacent cooling holes 50 of the base member 36 as viewed in the radial direction of the spacer 86.

According to the first modification, a plurality of cooling holes 44 is formed in the circumferential direction of the circular plate portion 40. A plurality of magnets 64 is also arranged in the circumferential direction of the circular plate portion 40. Each of the magnets 64 is placed to overlap a portion of the circular plate portion 40 between adjacent cooling holes 44 as viewed in the extending direction of the shaft 30. Therefore, it is possible to inhibit the magnets 64 from impairing an inflow of air toward the motor 20 through the cooling holes 44 and an outflow of air from the motor 20.

According to the first example modification, a plurality of cooling holes 50 is also formed in the circumferential direction of the outer peripheral wall portion 36B of the base member 36. A plurality of magnets 88 is also arranged in the circumferential direction of the outer peripheral wall portion 36B, and also each magnet 88 is placed to overlap a portion of the outer peripheral wall portion 36B between adjacent cooling holes 50 as viewed in a direction orthogonal to the extending direction of the shaft 30 (in the thickness direction of the outer peripheral wall portion 36B). Therefore, it is possible to inhibit the magnets 88 from impairing an inflow of air toward the motor 20 through the cooling holes 50 and an outflow of air from the motor 20.

### Second Modification

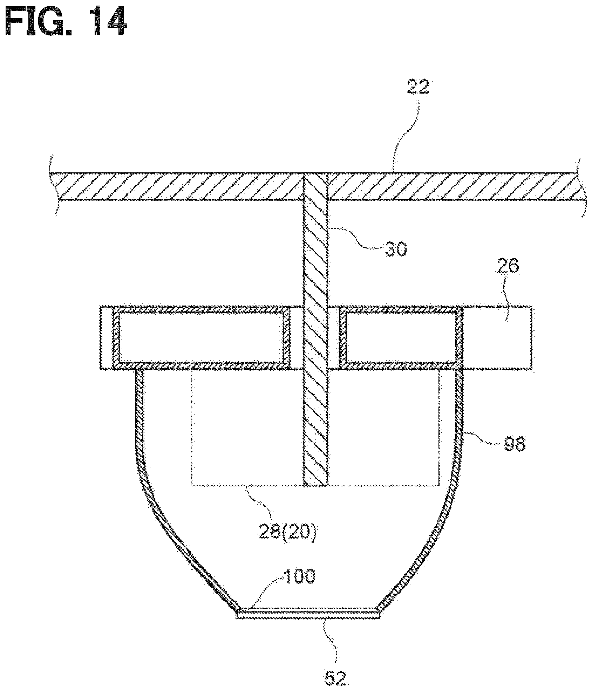

In a second modification illustrated in FIG. 14, the motor bodies 28 of the motor 20 on the front left side and the motor 20 on the front right side are housed in nacelles 98. Specifically, the nacelle 98 is formed into a taper-shaped cylindrical shape decreasing in diameter downward in the vertical direction of the flight hardware 10. An opening 100 is formed in a lower end portion of the nacelle 98. It is noted that the nacelle 98 is mounted to the support member 26 through a mounting member which is not shown. The opening 100 is an example of a "ventilation hole".

The first apparatus for removing magnetic foreign matter 52 is mounted in the opening 100 to cover the opening 100 as viewed in the vertical direction of the flight hardware 10.

According to the first modification, the motor body 28 of the motor 20 is covered with the nacelle 98, and the opening 100 is installed in the nacelle 98. By driving the motor 20, air flows through the opening 100 from the outside of the nacelle 98 into the motor 20.

The first apparatus for removing magnetic foreign matter 52 is placed in the opening 100 to cover the opening 100. Therefore, during the driving of the motor 20, the magnetic foreign matters moving together with the air are captured by at least one of the metallic mesh 56 or the metallic mesh 58 which are arranged face to face and spaced from each other in the flow direction of air flowing.

### Second Embodiment

Next, a second embodiment of the present disclosure will be described.

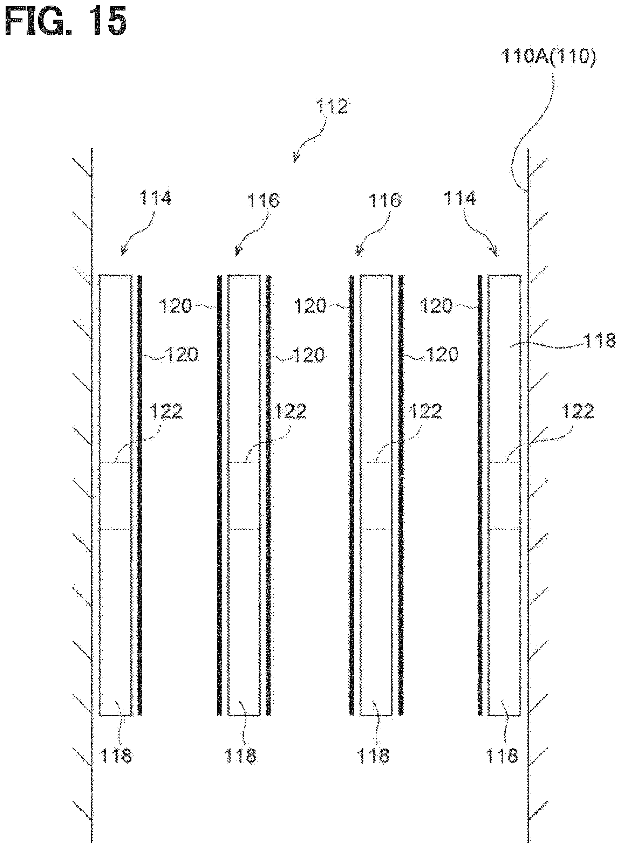

As illustrated in FIG. 15, in the embodiment, an apparatus for removing magnetic foreign matter 112 is placed in piping 110 in which a liquid such as water, oil and the like flows.

The apparatus for removing magnetic foreign matter 112 is configured to include a pair of first removal portions 114, a plurality of second removal portions 116 and connection portions which are not shown. The pair of first removal portions 114 is arranged along a pipe wall 110A of the steel made piping 110. The plurality of second removal portions 116 is arranged between the first removal portions 114. The connection portions connect the first and second removal portions 114 and 116 together.

The first removal portion 114 is configured to include a spacer 118, a plate 120 and a magnet 122. The spacer 118 is formed of non-magnetic material such as resin, aluminum and the like. The spacer 118 is formed into a plate shape extending in the extending direction of the piping 110, that is, in the direction of the liquid flowing in the conditions where the spacer 118 abuts the pipe wall 110A. The plate 120 is formed of a ferromagnet such as iron and the like, and is affixed to the surface of the spacer 118 on the opposite side from the pipe wall 110A. The magnet 122 is embedded in the spacer 118 with one of N pole and S pole placed on the pipe wall 110A side, the other pole placed on the side facing the center of the piping 110. The plate 120 is an example of the "first magnetic material" and "second magnetic material". The magnet 122 is an example of the "magnetic force generator".

The first removal portion 114 is attached to the pipe wall 110A at the pole on the pipe wall 110A side of the magnet 122. The plate 120 is magnetized to the other pole of the magnet 122 on the opposite side from the pipe wall 110A.

The second removal portion 116 is configured to include a spacer 118,the pair of plates 120 and a magnet 122. In the second removal portion 116, the plates 120 are affixed to both surfaces of the spacer 118, the surface on the pipe wall 110A side and the surface on the side facing the center of the piping 110. And, the magnet 122 is embedded in the spacer 118 as in the case of the first removal portion 114. In the second removal portion 116, one of the plates 120 is magnetized to one pole of the magnet 122, while the other plate 120 is magnetized to the other pole of the magnet 122.

The first removal portion 114 and the second removal portion 116 are arranged such that the plate 120 magnetized to the N pole of the magnet 122 and the plate 120 magnetized to the S pole of the magnet 122 face each other.

With such configuration, the plate 120 magnetized by the magnet 122 comes into contact with a liquid flowing in the piping 110, so that the magnetic foreign matters moving together with the liquid are attracted to the plate 120. Therefore, in the piping 110 in which the liquid flows, it is possible to capture the magnetic foreign matters moving together with the liquid.

### Other Modifications

In the above-described first embodiment, a single apparatus for removing magnetic foreign matter is arranged for the cooling holes, but a plurality of apparatus for removing magnetic foreign matters are stacked on top of one another and arranged for the cooling holes.

In the above-described first embodiment, the apparatus for removing magnetic foreign matter includes the magnet alone magnetizing a magnetic material such as a metallic mesh and the like, although the first embodiment is not so limited. For example, the magnetic material such as the metallic mesh and the like may be magnetized by a magnetic force of a magnet included in the rotor 34. Further, as a magnet, various magnets such as a ferrite magnet, an electromagnet and the like can be adopted.

Further, in the above-described first embodiment, the metallic mesh is adopted as a magnetic material to be magnetized by a magnet, although the first embodiment is not so limited. For example, a steel made punching plate, steel wool and/or the like can be adopted as a magnetic material.

In the above-described first embodiment, the first apparatus for removing magnetic foreign matter 52 and the second apparatus for removing magnetic foreign matter 54 are mounted to the motor 20, but the first embodiment is not so limited. For example, the first apparatus for removing magnetic foreign matter 52 and the second apparatus for removing magnetic foreign matter 54 may be placed in an inflow port of piping in which a liquid such as oil and the like flows.

Although the first embodiment and the second embodiment according to the present disclosure have been described, the present disclosure is not limited to the above. Other than the above, it should be understood that various modifications are made implementable without departing from the scope and spirit of the disclosure.

All of the cited literatures, patent applications and technical standards cited herein are hereby incorporated by reference herein just as if incorporation of the cited literatures, patent applications and technical standards on an individual basis by reference is mentioned specifically and individually.

## Claims

1. An apparatus for removing magnetic foreign matter, comprising:
a magnetic force generator; and
a magnetic material configured to
be magnetized by the magnetic force generator and
be brought into contact with fluid in a flow path that allows the fluid to flow therethrough.

2. The apparatus for removing magnetic foreign matter according to claim 1, wherein
the magnetic material includes a first magnetic material and a second magnetic material,
the first magnetic material is configured to
be magnetized by a N pole of a magnet, which is the magnetic force generator and
allow the fluid to pass therethrough,
the second magnetic material is configured to
be magnetized by an S pole of the magnet and
allow the fluid to pass therethrough, and
the first magnetic material and the second magnetic material are arranged face to face and spaced from each other in a flow direction in which the fluid is to flow.

3. The apparatus for removing magnetic foreign matter according to claim 2, wherein
the first magnetic material has a first mesh structure that includes a plurality of first metallic fibers and a plurality of second metallic fibers,
the first metallic fibers extend in a first direction and are arranged at intervals in a direction orthogonal to the first direction,
the second metallic fibers extend in a second direction, which intersects the first direction, and are arranged at intervals in a direction orthogonal to the second direction,
the second magnetic material has a second mesh structure that includes a plurality of third metallic fibers and a plurality of fourth metallic fibers,
the third metallic fibers extend in a third direction, which intersects the first direction and the second direction, and are arranged at intervals in a direction orthogonal to the third direction, and
the fourth metallic fibers extend in a fourth direction, which intersects the third direction, and are arranged at intervals in a direction orthogonal to the fourth direction.

4. The apparatus for removing magnetic foreign matter according to claim 3, wherein
the first mesh structure partially includes a first frame shaped portion that includes a pair of the first metallic fibers and a pair of the second metallic fibers,
the second mesh structure partially includes a second frame shaped portion that includes a pair of the third metallic fibers and a pair of the fourth metallic fibers, and
the first frame shaped portion and the second frame shaped portion intersect each other as viewed in the flow direction.

5. The apparatus for removing magnetic foreign matter according to any one of claims 2 to 4, wherein
the magnet is held by a spacer, and
the spacer is made of a non-magnetic material and interposed between the first magnetic material and the second magnetic material.

6. A brushless motor comprising:
a base member supporting a stator;
a shaft supported by the base member;
a rotor supported by the shaft and including a rotor housing covering the stator; and
the apparatus for removing magnetic foreign matter according to any one of claims 2 to 5, wherein
the apparatus for removing magnetic foreign matter is arranged on an air flow path including a first ventilation hole in the rotor housing and a second ventilation hole in the base member.

7. The brushless motor according to claim 6, wherein
the rotor housing includes a circular plate portion with a plate thickness direction along an extending direction of the shaft,
the first ventilation hole is formed in the circular plate portion, and
the apparatus for removing magnetic foreign matter covers the first ventilation hole along the circular plate portion.

8. The brushless motor according to claim 7, wherein
the first ventilation hole includes a plurality of first ventilation holes formed in a circumferential direction of the circular plate portion,
the magnet includes a plurality of magnets arranged in the circumferential direction of the circular plate portion, and
the plurality of magnets are arranged, such that each of the magnets overlaps a part of the circular plate portion between the first ventilation holes, which are adjacent to each other, as viewed in the extending direction.

9. The brushless motor according to any one of claims 6 to 8, wherein
the base member includes, as an outer peripheral portion, an outer peripheral wall portion,
the second ventilation hole is formed in the outer peripheral wall portion, and
the apparatus for removing magnetic foreign matter covers the second ventilation hole along the outer peripheral wall portion.

10. The brushless motor according to claim 9, wherein
the second ventilation hole includes a plurality of second ventilation holes formed in a circumferential direction of the outer peripheral wall portion,
the magnet includes a plurality of magnets arranged in the circumferential direction of the outer peripheral wall portion, and
the magnets are arranged, such that each of the plurality of magnets overlaps a portion of the outer peripheral wall portion between the second ventilation holes, which are adjacent to each other, as viewed in a thickness direction of the outer peripheral wall portion.

11. A propulsion machine, comprising:
a brushless motor including a base member supporting a stator, a shaft supported by the base member, and a rotor supported by the shaft and including a rotor housing covering the stator;
a propeller supported by the shaft;
a nacelle accommodating the brushless motor; and
the apparatus for removing magnetic foreign matter according to any one of claims 2 to 5, wherein
the apparatus for removing magnetic foreign matter covers a ventilation hole in the nacelle.
